Europäisches Patentamt

European Patent Office

Office européen des brevets

(19)

(11) Numéro de publication: **0 021 992**
**B1**

(12) **FASCICULE DE BREVET EUROPEEN**

(45) Date de publication du fascicule du brevet: **16.05.84**

(51) Int. Cl.³: **G 02 F 1/17**

(21) Numéro de dépôt: **80400896.9**

(22) Date de dépôt: **18.06.80**

(54) **Système d'électrodes de commande pour afficheur numérique à sept segments.**

(30) Priorité: **28.06.79 FR 7916740**

(43) Date de publication de la demande:
**07.01.81 Bulletin 81/01**

(45) Mention de la délivrance du brevet:
**16.05.84 Bulletin 84/20**

(84) Etats contractants désignés:
**CH DE GB IT LI NL**

(56) Documents cités:
**EP-A-0 001 955**
**DE-A-2 725 265**
**DE-A-2 731 718**
**FR-A-2 330 106**
**US-A-3 702 723**
**US-A-4 086 003**

**PATENTS ABSTRACTS OF JAPAN, vol. 2, no.
82, 30 juin 1978, page 3512E78**

(73) Titulaire: **COMMISSARIAT A L'ENERGIE
ATOMIQUE Etablissement de Caractère
Scientifique Technique et Industriel
B.P. 510
F-75752 Paris Cedex 15 (FR)**

(72) Inventeur: **Duchêne, Jacques
Chemin du Mas
F-38330 Saint Ismier (FR)**

(74) Mandataire: **Mongrédien, André et al
c/o BREVATOME 25, rue de Ponthieu
F-75008 Paris (FR)**

**Description**

La présente invention a pour objet un système d'électrodes pour afficheur électrolytique à sept segments selon le préambule de la revendication 1, un tel système est connu du document DE—A—2 731 718. Elle trouve une application dans la réalisation d'organes d'affichage (montres, tableaux de bord, appareils de mesure, etc...).

Une cellule d'affichage électrolytique à sept segments comprend une contre-électrode en regard de laquelle sont disposées sept électrodes transparentes réparties en six électrodes périphériques et une électrode centrale. Chaque électrode est alimentée en courant par une amenée de courant elle-même reliée à un plot de connexion permettant une liaison avec des organes d'alimentation appropriés. Entre les électrodes et la contre-électrode est inséré un électrolyte qui est apte, sous l'effet du passage du courant, à modifier l'aspect des électrodes, notamment par le dépôt puis par la dissolution d'une couche de métal.

La commande des cellules électrolytiques pose des problèmes spécifiques qu'on ne retrouve pas dans les autres types de cellules, à cristaux liquides ou à matériau électrochrome par exemple. En effet, dans l'affichage électrolytique, il est impératif de faire en sorte que le potentiel appliqué aux électrodes excitées présente une bonne uniformité, sinon le contraste de l'affichage obtenu ne présente pas l'uniformité requise. Cela est dû à la nature électrochimique des réactions qui se produisent sur les électrodes. Cette contrainte n'existe pas dans les cellules à cristaux liquides où le courant est environ 1 000 fois plus faible que dans le cellules électrolytiques (quelques $\mu A/cm^2$ contre quelques $mA/cm^2$), ce courant étant d'ailleurs ou courant de fuite et non un courant de commande. Elle n'existe pas non plus dans les dispositifs électrochromes (à $WO_3$ par exemple) pour lesquels l'apparition ou la disparition d'une coloration sont moins critiques.

C'est la raison pour laquelle les systèmes d'électrodes connus pour les cellules à cristaux liquides ou à couche électrochrome ne donnent pas satisfaction si on les adopte pour les cellules électrolytiques.

Le problème de l'uniformité du contraste dans les cellules électrolytiques est d'autant plus ardu à résoudre que les amenées de courant et les électrodes sont constituées par des couches minces d'oxyde conducteur qui présentent, du fait de leur minceur, une résistivité non négligeable. Ce problème recouvre en fait trois difficultés: a) obtenir l'égalité de la chute de tension le long de l'amenée de courant entre le plot de connexion et l'électrode, b) assurer une uniformité de potentiel sur la totalité de la surface de chaque électrode, c) résoudre les deux points précédents pour tous les segments, y compris les segment central, lequel est d'accès difficile puisqu'entouré par les six segments périphériques.

Si l'on utilise la technique décrite dans "Patent Abstract of Japan", vol. 2, n° 82, 30.6.1978, page 3512 E 78, Kokai Nr 53-47294, on obtient bien une égalité de la chute de tension mais le segment central est le siège d'un gradient de potentiel puisqu'il est alimenté par l'un de ses petits côtés. De même avec la technique du document DE—A—2 731 718. Si l'on utilise un dispositif du type de celui décrit par exemple dans le document US—A—3 702 723, la chute de tension ne nera pas la même sur toutes les amenées de courant entre le plot et l'électrode et les segments ne présenteront pas tous le même aspect. Si l'on utilise la disposition du document DE—A—2 725 265 valable pour les dispositifs à semiconducteurs, chaque segment sera bien alimenté par un de ses grands côtés, mais de manière non équipotentielle, car les amenées sont des bandes étroites; et le toute façon, cette technique valable pour les semiconducteurs n'est pas transposable aux dispositifs électrolytiques où les couches en jeu sont très minces et résistives.

La présente invention telle qu'elle est revendiquée a justement pour but de remédier à ces inconvénients en proposant un système qui permet de résoudre simultanément les trois difficultés mentionnées plus haut. Ce but est atteint en alimentant les sept électrodes de la même manière. La présence d'une électrode centrale nécessite que l'amenée de courant propre à cette électrode passe entre deux électrodes périphériques, ce qui conduit à un étranglement pour l'amenée de courant. Selon l'invention, cet étranglement est donc reproduit sur les amenées de courant propres aux six électrodes périphériques, ce qui évidemment n'est pas réalisé dans l'art antérieur où l'on profite de la facilité d'accès des électrodes périphériques pour alimenter celles-ci par des amenées de courant de formes simples. En outre, pour éviter la chute de tension le long d'un segment, chaque électrode est alimentée ie long de la totalité d'un de ses grands côtés. Ceci nécessite, pour chaque amenée de courant, une zone évasée entre l'étranglement et le segment. De cette manière, les lignes de courant divergent (ou convergent selon le sens du courant) entre l'étranglement et le grand côté de l'électrode, ce grand côté étant alors sensiblement confondu avec une ligne équipotentielle de l'amenée de courant. Naturellement, on s'efforce en outre de donner aux dimensions (largeur et longueur) des amenées de courant entre un plot et l'étranglement associé des valeurs telles que les chutes de tensions soient les mêmes pour toutes les amenées de courant.

De façon précise, la présente invention a pour objet un système d'électrodes pour afficheur électrolytique à sept segments, comprenant sur une paroi sept électrodes constituées par une première couche conductrice mince transparente en forme de segment ayant deux grands côtés, ces électrodes étant réparties en six électrodes périphériques et une électrode centrale, chaque électrode étant reliée à une seconde couche conductrice mince déposée sur ladite paroi et formant amenée de courant, chaque amenée étant reliée à un plot de connexion, caractérisé en ce que chaque amenée de courant comprend une zone d'étranglement réalisant les mêmes chutes de tensions entre lesdits plots et lesdites électrodes et suivie d'une zone d'évasément de l'amenée de courant aboutissant sur la totalité d'un des grands côtés d'une des électrodes et constituant une ligne équipotentielle lelong de ce grand côté, l'étranglement propre à l'amenée de courant affecté à l'électrode centrale étant situé entre deux électrodes périphériques adjacentes, dont l'une est parallèle à l'électrode centrale.

De préférence, la première couche constituant les électrodes et la seconde couche constituant les amenées de courant sont constituées par une seule couche d'un matériau conducteur transparent unique, les amenées de courant étant recouvertes d'un matériau isolant.

De toute façon, les charactéristiques et avantages de la présente invention apparaîtront mieux après la description qui suit d'exemples de réalisation. Cette description se réfère à des dessins annexés sur lesquels:

— la figure 1 représente schématiquement un système d'électrodes selon l'invention,
— la figure 2 illustre un mode particulier de réalisation d'un afficheur électrolytique conforme à l'invention,
— la figure 3 représente deux détails vus en coupe de l'afficheur de la figure précédente.

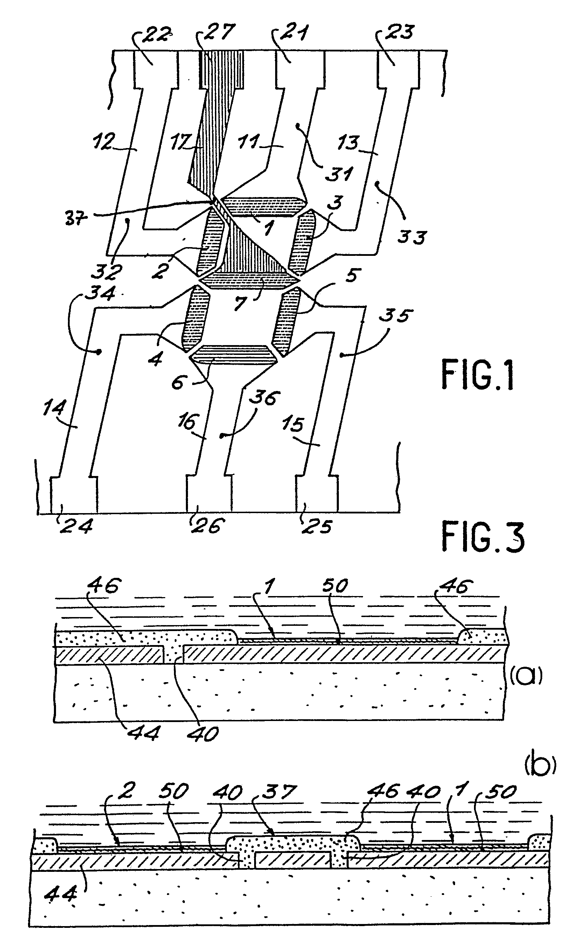

Le système représenté sur la figure 1 comprend six électrodes périphériques 1, 2, 3, 4, 5 et 6 et une septième 7 placée au centre. Ces électrodes sont constituées par exemple par une couche d'oxyde d'indium dopé à l'étain, ou d'oxyde d'étain dopé à l'antimoine. Il comprend en outre des amenées de courant respectivement 11 à 17 qui relient les électrodes à des plots de connexion respectivement 21 à 27. Ces plots peuvent être répartis de part et d'autre du dispositif, comme illustré, ou être tous ramenés d'un même côté.

Conformément à l'invention, chaque amenée de courant comprend une zone d'étranglement, respectivement 31 à 37, y compris celles des électrodes périphériques 1 à 6. L'étranglement de l'amenée de courant 17 propre à l'électrode centrale 7, est, dans le cas illustré, situé entre les électrodes périphériques 1 et 2. Les amenées de courant présentent ensuite en zone évasée qui aboutit sur le grand côté des électrodes. De cette manière, l'électrode est alimentée de manière sensiblement uniforme sur toute sa longueur. Le seul défaut d'uniformité pouvant encore subsister résulte de la chute de tension dans le sens de la largeur de l'électrode, chute qui est négligeable. La largeur et la longueur des amenées de courant entre les plots 21—27 et les étranglements 31—37 sont ajustées pour que les chutes de tensions entre lesdits plots et lesdits étranglements soient les mêmes pour toutes les amenées de courant 11 à 17. Ainsi est assurée l'uniformité de l'affichage sur la totalité des électrodes, y compris l'électrode centrale.

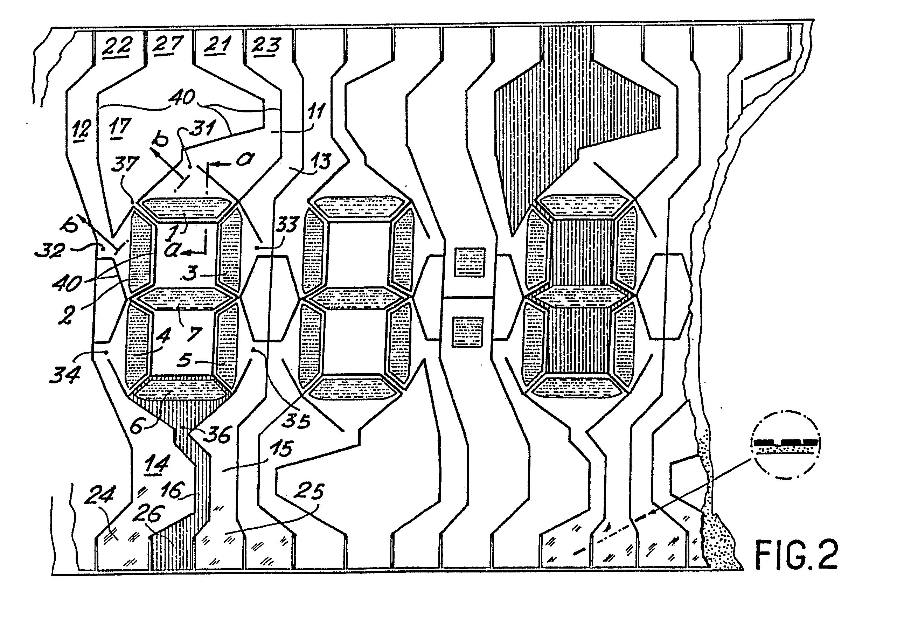

La figure 1 est un schéma de principe. Dans la pratique, on peut constituer le système comme illustré sur les figures 2 et 3 qui représentent une variante dans laquelle les électrodes et les amenées de courant sont constituées par un même matériau conducteur transparent déposé en couche mince sur la totalité de la paroi, l'isolement entre différentes amenées de courant étant assuré par des sillons gravés dans cette couche. La figure 2 représente le système en vue de dessus et la figure 3 deux coupes, d'une part au voisinage de l'électrode 1 (Fig. a) et d'autre part dans la zone de l'étranglement 37 situé entre les électrodes 1 et 2 (Fig. b). Tel qu'illustré, le système comprend une paroi recouverte par une couche uniforme 44 d'un matériau conducteur transparent (par exemple d'oxyde d'indium dopé à l'étain), dans laquelle des sillons 40 sont gravés pour isoler les amenées de courant entre elles, pour isoler également les plots de connexion et pour former les étranglements. Cette couche 44 est recouverte d'une couche isolante 46 (par exemple en silice), sauf aux endroits des électrodes, lesquelles sont alors en contact avec un électrolyte 48. L'affichage se produit par exemple par dépôt et redissolution d'une couche métallique 50 (notamment d'argent). Dans la zone située entre les électrodes 1 et 2 (Fig. 3b), l'amenée de courant est séparée desdites électrodes par deux sillons 40 et l'intervalle est recouvert de matière isolante.

A titre explicatif, l'intervalle entre les électrodes 1 et 2, peut être de l'ordre de 400 à 500 $\mu$m et les sillons peuvent présenter une largeur de l'ordre de 50 $\mu$m.

L'intérêt du mode de réalisation des figures 2 et 3 est de conduire à une excellente uniformité de l'aspect présenté par l'afficheur, du fait de l'uniformité de structure de la paroi offerte aux regards de l'observateur.

Dans l'exemple illustré sur la figure 2, on observera que le segment central est alimenté par une amenée de courant venant du haut pour le premier système, venant du bas pour le second, et ainsi de suite alternativement. Dans chaque système, l'électrode centrale est en fait en contact également avec une zone conductrice symétrique de la zone d'amenée de courant, cette zone symétrique ne participant pas à l'alimentation du segment mais étant tout de même réalisée pour obtenir une uniformité d'aspect de la cellule. De même, il existe des îlots de matière conductrice qui ne jouent aucun rôle, si ce n'est de remplir la surface visible.

**Revendications**

1. Système d'électrodes pour afficheur électrolytique á sept segments, comprenant sur une paroi isolante sept électrodes (1 à 7) constituées par une première couche conductrice mince transparente et formant chacune un segment ayant deux grands côtés, ces électrodes étant réparties en six électrodes périphériques (1 à 6) et une électrode centrale (7), chaque électrode étant reliée à une seconde couche conductrice mince déposée sur ladite paroi et formant amenée de courant (11 à 17), chaque amenée étant reliée à un plot de connexion (21 à 27), caractérisé en ce que chaque amenée de courant comprend une zone d'étranglement (31 à 37) réalisant les memes chutes de tensions entre lesdits plots et lesdites électrodes et suivie d'une zone d'évasement de l'amenée de courant aboutissant sur la totalité d'un des grands côtés d'une des electrodes, et constituant une ligne équipotentielle le long de ce grand côte l'étranglement (37) propre à l'amenée de courant (17) affecté à l'électrode centrale (7) étant situé entre deux électrodes périphériques adjacentes (1, 2) dont l'une est parallèle à l'électrode centrale.

2. Système d'électrodes selon la revendication 1, caractérisé en ce que la première couche constituant les électrodes et la seconde couche constituant les amenées de courant sont constituées par une seule couche (44) d'un matériau conducteur transparent unique, les amenées de courant étant recouvertes d'un matériau isolant (46).

3. Système d'électrodes selon la revendication 2, caractérisé en ce que les couches minces de matériau conducteur transparent formant les différentes amenées de courant et les électrodes recouvrent la totalité de la paroi, les différentes amenées de courant étant isolées les unes des autres par des sillons (40) gravés dans ladite couche (44).

**Patentansprüche**

1. Elektrodenvorrichtung für elektrolytische 7-Segment-Anzeigevorrichtungen mit sieben Elektroden (1 bis 7) auf einer isolierenden Wand, die von einer ersten leitenden, transparenten Schicht gebildet sind und von denen jede ein zwei große Seiten aufweisendes Segment bildet, wobei sich diese Elektroden auf sechs äußere Elektroden (1 bis 6) und eine zentrale Elektrode (7) aufteilen, von denen jede mit einer zweiten leitenden, dünnen Schicht verbunden ist, die auf der Wand aufgebracht ist, und eine Stromzuführung (11 bis 17) bildet, wobei jede Zuführung mit einer Verbindungsklemme (21 bis 27) verbunden ist, dadurch gekennzeichnet, daß jede Stromzuführung einen Einschnürungsbereich (31 bis 37) aufweist, durch den zwischen den Verbindungsklemmen und den Elektroden dieselben Spannungsabfälle verwirklicht sind, gefolgt von einem Erweiterungsbereich der Stromzuführung, der an die Ganzheit einer der großen Seiten einer der Elektroden angrenzt und eine Äquipotentiallinie längs dieser großen Seite bildet, wobei die zu der für die zentrale Elektrode (7) bestimmte Stromzuführung (17) gehörende Einschnürung (37) zwischen zwei benachbarten äißeren Elektroden (1, 2) angeordnet ist, von denen eine parallel zu der zentralen Elektrode ist.

2. Elektrodenvorrichtung nach Anspruch 1, dadurch gekennzeichnet, daß die erste, die Elektroden bildende Schicht und die zweite, die Stromzuführung bildende Schicht durch eine einzige Schicht (44) aus einem einzigen durchsichtigen, leitenden Material gebildet sind, wobei die Stromzuführungen von einem isolierenden Material (46) überzogen sind.

3. Elektrodenvorrichtung nach Anspruch 2, dadurch gekennzeichnet, daß die die verschiedenen Stromzuführungen bildenden dünnen Schichten leitenden, transparenten Materials und die Elektroden die gesamte Wand überziehen, wobei die verschiedenen Stromzuführungen durch in die Schicht (44) eingravierte Rinnen voneinander isoliert sind.

**Claims**

1. Electrode system for a 7-segment electrolytic display device comprising, on an insulating surface, seven electrodes (1 to 7) comprising a first thin transparent conductive layer and each forming a segment having two longer sides, said electrodes being divided into six peripheral electrodes (1 to 6) and one central electrode (7), each electrode being connected to a second thin conductive layer deposited on said surface and forming electrical leads (11 to 17), each being connected to a terminal, characterized in that each electrical lead comprises a constriction zone (31 to 37) providing the same potential drop between said terminals and said electrodes followed by a flared zone for the electrical lead abutting on the entire length of one of the longer sides of one of the electrodes, and constituting an equipotential line lengthways of said longer side, the restriction (37) in the electrical lead (17) for the central electrode (7) being located between two adjacent peripheral electrodes (1, 2), one of which is parallel to the central electrode.

2. Electrode system according to claim 1, characterized in that the first layer constituting the electrodes and the second layer constituting the electrical leads comprise a single layer (44) of a single transparent conductive material, the electrical leads being covered by an insulating material (46).

3. Electrode system according to claim 2, characterized in that the thin layers of transparent conductive material forming the different electrical leads and the electrodes cover the entire surface, the different electrical leads being isolated from one another by grooves (40) engraved in the said layer (44).

FIG.1

FIG.3

(a)

(b)

FIG.2